Europäisches Patentamt

European Patent Office

Office européen des brevets

(11) Numéro de publication: **0 501 255 A1**

## DEMANDE DE BREVET EUROPEEN

(21) Numéro de dépôt: **92102461.8**

(22) Date de dépôt: **14.02.92**

(51) Int. Cl.5: **A61C 5/02**

(30) Priorité: **01.03.91 CH 621/91**

(43) Date de publication de la demande:
**02.09.92 Bulletin 92/36**

(84) Etats contractants désignés:
**DE FR SE**

(71) Demandeur: **LES FILS D'AUGUSTE MAILLEFER SOCIETE ANONYME A BALLAIGUES**

**CH-1338 Ballaigues(CH)**

(72) Inventeur: **Velvart, Peter, Dr.**
**Studenmätteli Strasse 32e**
**CH-8903 Birmensdorf(CH)**
Inventeur: **Randin, Jean-Claude**
**Chemin du Verger 2**
**CH-1338 Ballaigues(CH)**

(74) Mandataire: **Robert, Jean S.**
**51, route du Prieur**
**CH-1257 Landecy (Genève)(CH)**

(54) **Jeu d'instruments pour l'alésage des canaux radiculaires dentaires.**

(57) Les instruments de la série sont répartis par groupes de trois ayant, dans chaque groupe, un diamètre D1, mesuré à la naissance de sa pointe terminale, identique. Dans chaque groupe, le diamètre D2 mesuré à la naissance des lèvres coupantes de la tige conique de l'instrument est différent, allant en augmentant sensiblement de 10 % d'un instrument à l'autre du groupe. Ainsi, la conicité des trois instruments de chaque groupe va en croissant de l'un à l'autre, ce qui permet au praticien d'aléser des canaux radiculaires dentaires en leur donnant une forme plus évasée que ce n'est habituellement le cas, une telle forme convenant particulièrement aux obturations au moyen de gutta-percha.

FIG. 3

| TYPE | N° | Ø D1 | Ø D2 |
|------|----|------|------|
| 15 | 1 | 0.15 | 0.47 |
| 15 | 2 | 0.15 | 0.52 |
| 15 | 3 | 0.15 | 0.57 |
| 20 | 1 | 0.20 | 0.52 |
| 20 | 2 | 0.20 | 0.57 |
| 20 | 3 | 0.20 | 0.62 |
| 25 | 1 | 0 25 | 0 57 |
| 25 | 2 | 0 25 | 0 62 |
| 25 | 3 | 0 25 | 0 67 |
| 30 | 1 | 0 30 | 0 62 |
| 30 | 2 | 0 30 | 0 67 |
| 30 | 3 | 0 30 | 0 72 |
| 35 | 1 | 0 35 | 0 67 |
| 35 | 2 | 0 35 | 0 72 |
| 35 | 3 | 0 35 | 0 77 |
| 40 | 1 | 0 40 | 0 72 |
| 40 | 2 | 0 40 | 0 77 |
| 40 | 3 | 0 40 | 0 82 |

EP 0 501 255 A1

La présente invention a pour objet un jeu d'instruments pour l'alésage des canaux radiculaires dentaires comprenant chacun une tige conique présentant au moins une lèvre hélicoïdale coupante, et se terminant par une partie dépourvue de ladite lèvre, ledit jeu comprenant des instruments dont les diamètres terminaux, c'est-à-dire mesurés à la naissance de la partie terminale, sont différents les uns des autres.

De tels jeux d'instruments, constitués par des broches et limes, sont connus en soi.

Ils sont réalisés en des séries de diamètres terminaux différents, se situant, le plus souvent, entre 0,06 mm et 1,4 mm. Dans ces instruments, la conicité de la tige est constante, quel que soit le diamètre terminal, cette conicité s'exprimant, généralement, non pas par l'angle d'ouverture mais par la différence entre le diamètre terminal et le diamètre mesuré à la naissance de la ou des lèvres hélicoïdales de coupe. La longueur de la partie de la tige présentant la ou lesdites lèvres étant généralement de 16 mm, la différence entre le diamètre terminal et le diamètre de la tige à la naissance des lèvres est le plus généralement de 0,32 mm.

Le praticien qui procède à l'alésage d'un canal radiculaire dentaire utilise les instruments du jeu en commençant par un instrument de petit diamètre et en utilisant ensuite, successivement, les instruments de diamètre croissant jusqu'à ce que toute la pulpe infectée soit éliminée et que le canal alésé ait une forme convenant à son obturation au moyen de gutta-percha ou de ciment.

Les techniques odontologiques les plus modernes commandent que l'on donne au canal radiculaire une forme plus évasée que précédemment, le canal étant large à sa partie cervicale, près de la couronne de la dent, et devant rester très étroit à sa partie apicale, au voisinage de l'extrémité de la racine dentaire. En effet, cette forme très évasée des canaux radiculaires une fois alésés convient mieux à l'obturation au moyen de gutta-percha, technique qui tend à se répandre de plus en plus.

Le but de la présente invention est de permettre la réalisation de canaux radiculaires alésés de forme plus évasée que jusqu'à présent.

Ce but est atteint grâce aux moyens définis dans la revendication 1.

Le dessin annexé illustre l'invention.

La fig. 1 est une vue en élévation d'un instrument pour l'alésage des canaux radiculaires dentaires.

La fig. 2 est une vue d'un détail de cet instrument, à plus grande échelle.

La fig. 3 est un tableau des différents instruments d'un même jeu indiquant les diamètres terminaux ainsi que les diamètres à la naissance de la ou des lèvres hélicoïdales de coupe.

La fig. 4 est une coupe d'une partie d'une racine dentaire montrant le canal alésé que l'on obtient à l'aide du présent jeu d'instruments, et

Les figs. 5, 6 et 7 sont des vues en élévation de trois variantes d'instruments pour l'alésage des canaux radiculaires dentaires.

L'instrument représenté comprend un manche 1 dans lequel est fixée une tige conique 2 dans la partie antérieure de laquelle sont ménagées des lèvres hélicoïdales de coupe 3. Dans la pratique, on obtiendra l'instrument en partant d'une tige effilée de section polygonale, par exemple carrée, que l'on soumettra à une torsion.

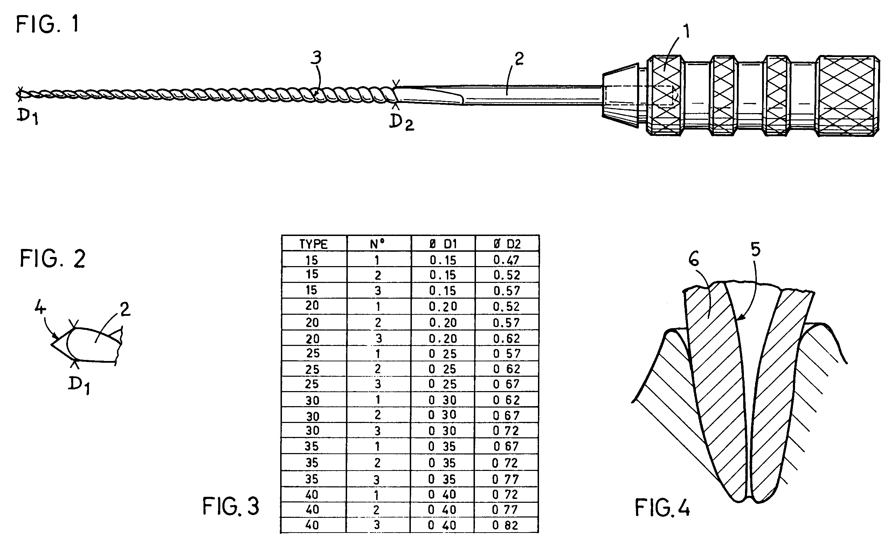

L'extrémité de la tige 2, dépourvue de lèvres coupantes, est constituée par une pointe conique 4 (fig.2). Le diamètre de la tige à la naissance de la pointe 4, qui constitue le diamètre nominal servant à la désignation de l'instrument, comme l'indique la première colonne du tableau de la fig. 3, est désigné par D1, alors que son diamètre à la naissance des lèvres de coupe 3 est désigné par D2. Le tableau de la fig. 3 montre que les instruments du jeu sont répartis par groupes de trois ayant le même diamètre terminal D1, mais de diamètres D2 différents.

C'est ainsi que, dans le premier groupe indiqué, du type "15", dont les instruments ont un diamètre D1 valant 0,15 mm, le diamètre D2 sera de 0,47, 0,52 et 0,57 mm, respectivement, pour chacune des trois unités du groupe, ce qui représente une variation d'environ 10 % produisant une variation correspondante de l'angle d'ouverture de la conicité de la tige 2.

Le deuxième groupe de trois unités, du type "20", aura un diamètre D1 de 0,20 mm et des diamètres D2 de 0,52, 0,57 et 0,62 mm, respectivement.

Comme le montre le tableau de la fig. 3, les diamètres D1 varient, d'un groupe à l'autre, de 5/00 de mm, les diamètres D2 se chevauchant d'un groupe à l'autre, le diamètre D2 le plus faible d'un groupe correspondant au diamètre D2 intermédiaire du groupe précédent. Au-delà d'une certaine valeur de D1, par exemple à partir de 0,60 mm, la variation de D1, d'un groupe à l'autre, ira par exemple de 10 en 10/00 et non pas de 5 en 5/00 comme pour les plus petites tailles. Les valeurs de D2 varieront de façon correspondante. Le diamètre D1 maximum sera, normalement, de 1,40 mm, ce qui donnera des diamètres D2 de 1,62, 1,72 et 1,82 mm, respectivement, pour les trois unités du dernier groupe.

Le praticien désirant aléser un canal radiculaire dentaire, tel le canal 5 ménagé dans la racine 6 (fig. 4), en lui donnant une forme évasée, utilisera donc les différents groupes d'instruments du jeu en commençant par une petite taille pour aller en croissant vers les grandes tailles et, successivement, les trois unités de chaque groupe, également par taille croissante, avant de passer au groupe suivant.

Dans l'exemple représenté à la fig. 1, le manche 1 de l'instrument est destiné à être saisi par le praticien entre le pouce et l'index, ce qui permet de lui imprimer manuellement un mouvement rotatif ou de va-et-vient. Mais l'invention s'appliquera aussi bien à des instruments destinés à être entraînés mécaniquement, leur manche étant agencé pour s'adapter à une pièce à main.

De même, l'instrument représenté est à pointe conique, mais son extrémité dépourvue de lèvres coupantes pourra également être ogivale, arrondie ou aplatie, si désiré.

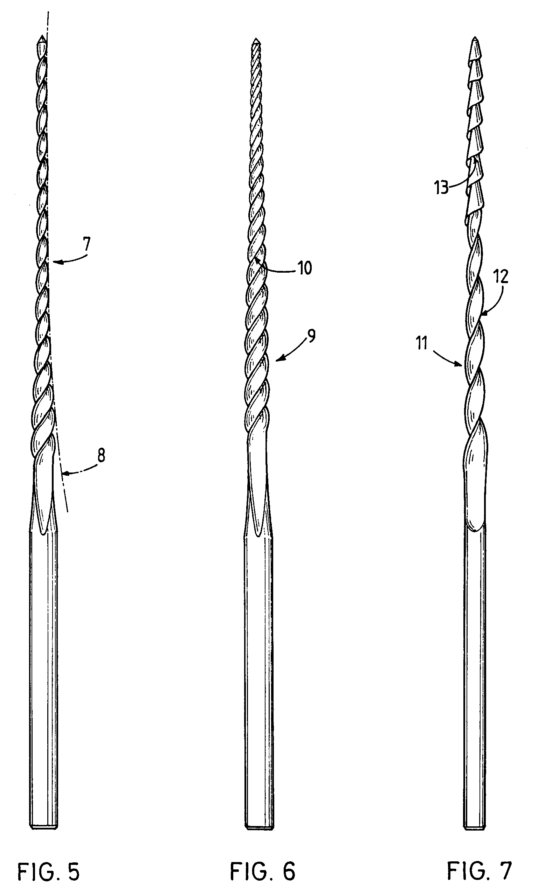

Dans les variantes des figures 5 et 6, les instruments représentés appartiennent également à un jeu, comme dans la première forme d'exécution, chacun des instruments de ces trois variantes étant toutefois différent de celui de la figure 1.

L'instrument de la fig. 5, désigné d'une façon générale par 7, diffère de celui de la fig. 1 essentiellement par le fait que sa partie effilée n'est pas conique mais concave, comme le montre la ligne en traits mixtes 8 qui est la génératrice de la surface de révolution dans laquelle s'inscrit cette partie effilée.

L'instrument de la fig. 6, désigné d'une façon générale par 9, diffère de celui de la fig. 1 par le fait que le pas des lèvres hélicoïdales de coupe, désignées par 10, va en se reserrant de la naissance de la partie effilée de l'instrument en direction de sa pointe.

Enfin, dans la variante de la fig. 7, l'instrument, désigné d'une façon générale par 11, a sa partie effilée qui présente des lèvres hélicoïdales de coupe de forme différente en 12, au voisinage de la naissance de ladite partie effilée, qu'en 13, à la pointe de l'instrument.

## Revendications

1. Jeu d'instruments pour l'alésage des canaux radiculaires dentaires comprenant chacun une tige conique présentant au moins une lèvre hélicoïdale coupante, et se terminant par une partie dépourvue de ladite lèvre, ledit jeu comprenant des instruments dont les diamètres terminaux, c'est-à-dire mesurés à la naissance de la partie terminale, sont différents les uns des autres, caractérisé par le fait qu'il comprend au moins deux instruments de même diamètre terminal mais de conicité de tige différente.

2. Jeu d'instruments suivant la revendication 1, caractérisé par le fait qu'il comprend plusieurs groupes d'instruments, de trois unités chacun, de même diamètre terminal, la conicité de chaque instrument dans un même groupe étant différente de l'un à l'autre.

3. Jeu d'instruments suivant la revendication 2, caractérisé par le fait que l'ouverture du cône que forme la tige de chaque instrument d'un même groupe varie, d'un instrument à l'autre et dans le même groupe, d'environ 10 %.

4. Jeu d'instruments suivant la revendication 2, caractérisé par le fait que les conicités des instruments se chevauchent d'un groupe à l'autre, la conicité de l'instrument intermédiaire de chaque groupe correspondant à la conicité de l'instrument de plus forte ouverture du groupe précédent.

FIG. 1

3

2

1

$D_1$

$D_2$

FIG. 2

4

2

$D_1$

FIG. 3

| TYPE | N° | Ø D1 | Ø D2 |
|------|----|------|------|
| 15 | 1 | 0.15 | 0.47 |
| 15 | 2 | 0.15 | 0.52 |
| 15 | 3 | 0.15 | 0.57 |
| 20 | 1 | 0.20 | 0.52 |
| 20 | 2 | 0.20 | 0.57 |
| 20 | 3 | 0.20 | 0.62 |
| 25 | 1 | 0 25 | 0 57 |
| 25 | 2 | 0 25 | 0 62 |
| 25 | 3 | 0 25 | 0 67 |
| 30 | 1 | 0 30 | 0 62 |
| 30 | 2 | 0 30 | 0 67 |
| 30 | 3 | 0 30 | 0 72 |
| 35 | 1 | 0 35 | 0 67 |
| 35 | 2 | 0 35 | 0 72 |
| 35 | 3 | 0 35 | 0 77 |
| 40 | 1 | 0 40 | 0 72 |
| 40 | 2 | 0 40 | 0 77 |
| 40 | 3 | 0 40 | 0 82 |

6

5

FIG. 4

FIG. 5      FIG. 6      FIG. 7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 617 704 (RIITANO) | 1,2 | A61C5/02 |
| A | | 3,4 | |
| | * page 5, ligne 11 – page 7, ligne 16; figures 1,3 * | | |
| | --- | | |
| X | WO-A-9 013 267 (SCHILDER) | 1,2 | |
| A | | 3,4 | |
| | * abrégé; revendication 1 * | | |
| | --- | | |
| X | FR-A-2 597 327 (RIITANO) | 1,2 | |
| A | | 3,4 | |
| | * abrégé * | | |
| | * page 6, ligne 9 – ligne 17 * | | |
| | --- | | |
| X | EP-A-0 257 961 (BUCHANAN) | 1,2 | |
| A | * colonne 2, ligne 27 – ligne 59 * | 3,4 | |
| | ----- | | |

**DOMAINES TECHNIQUES RECHERCHES (Int. Cl.5)**

A61C

**Le présent rapport a été établi pour toutes les revendications**

| Lieu de la recherche | Date d'achèvement de la recherche | Examinateur |
|---|---|---|
| LA HAYE | 21 AVRIL 1992 | VLECK J. |

EPO FORM 1503 03.82 (P0402)